# EUROPEAN PATENT SPECIFICATION

(11) **EP 2 141 138 B1**
(45) Date of publication and mention of the grant of the patent: **14.03.2012**
(21) Application number: 09162700.0
(22) Date of filing: 15.06.2009
(51) Int. Cl.: C04B 35/18, C04B 35/63, C04B 35/626, C04B 35/622, B23P 6/00, F01D 5/00, F01D 5/28, C23C 24/08

(54) **Method of repairing a thermal barrier coating and repaired coating formed thereby**
Verfahren zum Reparieren einer Wärmedämmbeschichtung und dadurch gebildete reparierte Beschichtung
Procédé de réparation de revêtement à barrière thermique et revêtement réparé formé avec celui-ci

(30) Priority: 23.06.2008 US 144109
(43) Date of publication of application: 06.01.2010
(73) Proprietor: General Electric Company, Schenectady, NY 12345 (US)
(72) Inventor: Skoog, Andrew Jay, West Chester, OH 45069 (US); Murphy, Jane Ann, Middletown, OH 45044 (US)
(74) Representative: Szary, Anne Catherine

(56) References cited:
- GB-A- 2 081 246
- US-A- 5 759 932
- US-A- 5 985 368
- US-A- 6 071 628
- US-A1- 2007 209 317

## Description

### BACKGROUND OF THE INVENTION

This invention relates to coatings for components exposed to high temperatures, such as the hostile thermal environment of a gas turbine. More particularly, this invention is directed to a method for repairing thermal barrier coatings that have suffered localized spallation.

Hot section components of aircraft and industrial (power generation) gas turbine engines are often protected by a thermal barrier coating (TBC), which reduces the temperature of the underlying component substrate and thereby prolongs the service life of the component. Ceramic materials and particularly yttria-stabilized zirconia (YSZ) are widely used as TBC materials because of their high temperature capability, low thermal conductivity, and relative ease of deposition by plasma spraying, flame spraying, and physical vapor deposition (PVD) such as electron beam physical vapor deposition (EBPVD). Air plasma spraying (APS) is often preferred over other deposition processes due to relatively low equipment costs and ease of application and masking.

Analysis has shown that YSZ TBC's deposited by APS are about 20% to 70% transparent to thermal radiation (wavelengths of about 780 nm to about 1 mm) when deposited at typical thicknesses of about 250 to 500 micrometers. As a result, the thermal protection provided by such TBC's is compromised by their infrared (IR) transmissivity in environments that have high thermal radiation loads, such as within the combustor section of a gas turbine. In response, other materials have been proposed for insulating combustion section hardware and other hardware subject to similar operating conditions. Notable examples include materials containing alumina and silica that are non-transparent to IR wavelengths of particular concern in the combustor, for example, wavelengths of about 0.3 to about 6 micrometers. These coating materials also have the advantage of having lower mass and excellent insulating properties. Particular examples of TBC's formed of these coating materials involve the use of a mixture containing alumina powder particles and a silica precursor, which are applied to the surface to be protected and heated to thermally decompose the precursor to form a silica matrix in which the powder particles are dispersed. The mixture can be preformed as a tape that is applied to the surface or can be sprayed onto the surface. As examples, see commonly-assigned U.S. Patent Nos. 6,165,600, 6,177,186, 6,210,791, 6,465,090, and 6,827,969.

To be effective, TBC systems must have low thermal conductivity, strongly adhere to the component, and remain adherent throughout many heating and cooling cycles. The latter requirement is particularly demanding due to the different coefficients of thermal expansion between the ceramic materials of the TBC and the substrates they protect, which are typically metallic superalloys. To promote adhesion and extend the service life of a TBC system, an oxidation-resistant bond coat is often employed. Bond coats are typically in the form of overlay coatings such as MCrAlX (where M is iron, cobalt and/or nickel, and X is yttrium, rare earth elements, and/or reactive elements), or diffusion aluminide coatings. During the deposition of the ceramic TBC and subsequent exposures to high temperatures, such as during engine operation, these bond coats form a tightly adherent alumina (Al₂O₃) layer or scale that adheres the TBC to the bond coat.

The service life of a TBC system is typically limited by a spallation event driven by bond coat oxidation, increased interfacial stresses, and the resulting thermal fatigue. Though significant advances have been made, there is the inevitable requirement to repair components whose thermal barrier coatings have spalled. Though spallation typically occurs in localized regions or patches, the conventional repair method has been to completely remove the thermal barrier coating, restore or repair the bond layer surface as necessary, and then recoat the entire component. As an alternative, U.S. Patent No. 5,723,078 to Nagaraj et al. teach a process for selectively repairing a spalled region of a TBC using a plasma spray technique.

In the case of large power generation turbines, completely halting power generation for an extended period in order to remove components whose TBC's have suffered only localized spallation is not economically desirable. As a result, components identified as having spalled TBC are often analyzed to determine whether the spallation has occurred in a high stress area, and a judgment is then made as to the risk of damage to the turbine due to the reduced thermal protection of the component, which if excessive can lead to catastrophic failure of the component. If the decision is to repair the TBC, the spalled component is removed and new TBC material is deposited by plasma spraying on the spalled surface region. Such repair processes have found wide use for the repair of YSZ TBC's. However, there is an ongoing need for new repair materials and techniques, including those particularly adapted to repair the aforementioned alumina-silica TBC materials.

### BRIEF DESCRIPTION OF THE INVENTION

The present invention provides a repair method for repairing a TBC on a component, wherein the TBC material is based on alumina-silica compositions.

According to a first aspect of the invention, the method includes preparing a coating composition comprising solid ceramic particles, hollow ceramic particles, and a silica precursor binder, applying the coating composition on an exposed surface area of the component, for example, exposed by localized spallation, and then reacting the binder to yield a repair coating that covers the surface area of the component. The resulting repair coating comprises the solid ceramic particles and the hollow ceramic particles in a silica matrix formed by thermally decomposing the binder. Also encompassed by the invention is the coating composition and the repaired TBC.

Coating compositions and the resulting repair coatings described above are compatible with alumina-silica based TBC materials, and the hollow ceramic particles provide the additional benefit of reducing density and enhancing the insulative and erosion-resistant properties of the repair coating. Preferred materials for the solid and hollow ceramic particles are non-transparent to IR wavelengths of particular concern in the combustor section of a turbine engine, for example, wavelengths of about 0.3 to about 6 micrometers. As such, preferred materials for the repair coating do not degrade the thermal reflectivity of the TBC being repaired.

In view of the above, it can also be appreciated that the method of this invention does not require the TBC to be completely removed, and does not require removal of the component in order to repair its TBC. The method also does not require a high temperature treatment, as the silica precursor binder may be initially cured to enable the repair coating to exhibit sufficient strength to withstand engine operation, during which time the precursor binder is gradually converted to form the silica matrix. As a result, minimal downtime is necessary to complete the repair and resume operation of the turbine engine. In the case of large power generation turbines, the cost is avoided of completely halting power generation for an extended period in order to remove, repair and then reinstall a component that has suffered only localized spallation.

The method of this invention can be used to repair ceramic coatings on a wide variety of components exposed to thermal loads, having TBCs formed of alumina-silica compositions and applied to hot section components of aircraft and industrial (power generation) gas turbine engines.

Other objects and advantages of this invention will be better appreciated from the following detailed description.

### BRIEF DESCRIPTION OF THE DRAWINGS

FIG. 1 is a cross-sectional representation of a component surface protected by a thermal barrier coating that has suffered localized spallation.
FIGS. 2 and 3 are cross-sectional representations of the component surface of Figure 1 during the repair of the thermal barrier coating in accordance with a preferred embodiment of this invention.

### DETAILED DESCRIPTION OF THE INVENTION

The present invention is directed to components protected by thermal barrier coatings for operation within environments characterized by relatively high temperatures, and are therefore subjected to severe thermal stresses, cycling, and radiation loads. Notable examples of such components include the high and low pressure turbine nozzles and blades, shrouds, combustor liners, secondary seals, and augmentor hardware of gas turbine engines for use in aircraft and industrial applications. The present invention is particularly directed to thermal barrier coatings (TBCs) that exhibit thermal insulating properties to conduction and thermal radiation. The advantages of this invention will be described as particularly applicable to combustor components of turbine engines, though the invention is generally applicable to any components in which thermal barrier-type coatings as described herein may be used to thermally insulate a component from its environment.

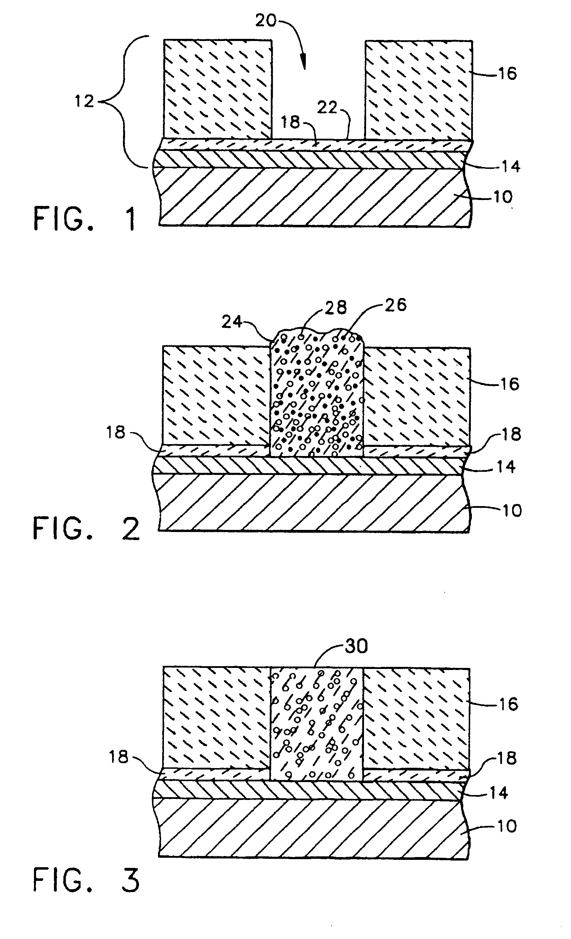

Represented in Figure 1 is a surface region of a component 10 with a thermal barrier coating (TBC) system 12 having an exposed region 20, for example, as a result of localized spallation. The TBC system 12 is shown as being composed of a bond coat 14 on the surface of the component 10, and a ceramic layer (TBC) 16 deposited on the bond coat 14 as the thermal barrier coating. As is the situation with high temperature components of gas turbine engines, the component 10 may be formed of a nickel, cobalt or iron-base superalloy. The bond coat 14 is preferably formed of a metallic oxidation-resistant material, so as to protect the underlying component 10 from oxidation and enable the ceramic layer 16 to more tenaciously adhere to the component 10. Suitable materials for the bond coat 14 include, but are not limited to, MCrAlX overlay coatings and diffusion aluminide coatings. Following deposition of the bond coat 14, an oxide scale 18 forms on the surface of the bond coat 14 at elevated temperatures. The oxide scale 18 provides a surface to which the ceramic layer 16 more tenaciously adheres, thereby promoting the spallation resistance of the ceramic layer 16.

The ceramic layer 16 is an alumina/silica-based material (alumina, silica, and/or aluminosilicates are the predominant constituents) that is preferably non-transparent to IR wavelengths of particular concern in the combustion sections of turbine engines. Particular examples of such materials include the aforementioned U.S. Patent Nos. 6,165,600, 6,177,186, 6,210,791, 6,465,090, and 6,827,969, whose contents regarding coating compositions and coating processes are referenced here. The ceramic layer 16 may have been formed from tapes applied to the surface of the component 10, or a composition sprayed onto the component surface, or another suitable deposition process. Preferred examples of these coating materials contain alumina powder particles, optionally additional ceramic particles, and a silica precursor, which are mixed and applied to the component surface and then heated to thermally decompose the precursor to form a silica matrix in which the powder particles are dispersed. The coating material is deposited to a thickness that is sufficient so that the resulting ceramic layer 16 is capable of providing the required thermal protection for the component 10.

If located within the combustion section of a turbine engine, surfaces of the component 10 are subjected to hot combustion gases during operation of the engine and are therefore subjected to severe attack by oxidation, corrosion and erosion. Accordingly, the component 10 must remain protected from its hostile operating environment by the TBC system 12. Loss of the ceramic layer 16 due to spallation leads to premature and often rapid deterioration of the component 10. As such, the localized spalled region 20 of the ceramic layer 16 represented in Figure 1 must be repaired or the component 10 scrapped. A preferred TBC repair process of this invention is represented in Figures 2 and 3. Each of the following steps performed in the repair of the component 10 can be performed while the component 10 remains installed in the turbine engine, thereby completely avoiding the requirement to remove and later reinstall the component.

The repair process begins with cleaning the surface 22 exposed by the localized spalled region 20 so as to remove loose oxides and contaminants such as grease, oils and soot without damaging the undamaged ceramic layer 16. The oxide scale 18 as well as any well-adhered remnants of the ceramic layer 16 exposed by the spalled region 20 may remain to promote adhesion of a coating composition 24 deposited in the spalled region 20, as represented by Figure 2. According to the invention, the coating composition 24 is a mixture containing one or more powders of solid (non-hollow) ceramic particles 26, one or more powders of hollow ceramic particles (microballoons) 28, and a silica precursor that when sufficiently heated forms a ceramic repair coating 30 shown in Figure 3. In addition, the coating composition 24 may contain other filler materials, including glass compositions.

The solid particles 26 are preferably alumina, though the use of other ceramic materials or mixtures thereof is also foreseeable. Preferred materials are refractory oxides that are non-transparent to IR wavelengths, including alumina, magnesia (MgO), titania (TiO₂) and calcia (CaO). Additionally, YSZ particles may be included as part of the solid particles 26 as scattering sites for wavelengths of about 0.9 about 2.5 micrometers. Suitable particle sizes for the powder particles 26 and other solid constituents of the coating composition 24 are generally in a range of about 0.01 to about 100 micrometers, more preferably about 0.1 to about 25 micrometers. Depending on the particular application and desired construction of the coating 30, preferred alumina powders for the solid particles 26 may include A-14 (an unground calcined alumina powder; particle size range of about 3 to 5.5 micrometers) available from Almatis, A-16SG (a super-ground thermally reactive alumina powder; particle size range of about 0.3 to 0.5 micrometer) also available from Almatis, and SM8 (particle size range of about 0.10 to 0.6 micrometer) available from Baikowski International Corp.

Depending on the particular application and desired construction of the coating 30, the hollow ceramic particles 28 may be alumina, another ceramic material, or a mixture of one or more ceramic materials, with preferred materials being those non-transparent to IR wavelengths, such as alumina and silicates including aluminosilicates. Though shown throughout the coating composition 24 and repair coating 30 in FIGS. 2 and 3, the hollow particles 26 may be limited to certain regions of the composition 24 and coating 30, for example, their innermost, outermost, and/or intermediate regions. According to a preferred aspect of the invention, an important role played by the hollow ceramic particles 28 is to increase the insulation properties of the repair coating 30 without diminishing the overall non-transparency of the alumina-silica ceramic layer 16 to IR wavelengths of particular concern in the combustion sections of turbine engines. Other potential benefits include improved erosion resistance of the repair coating 30 with minimal or no adverse increase in weight. The low density of the hollow powder particles 28 compared to the solid powder particles 26 allows for greater thicknesses of the repair coating 30 without exceeding the weight of a similar coating composition containing only the solid particles 26, or a repair coatings 30 of similar thicknesses but lower weight. Preferred materials for the hollow particles 28 include aluminosilicates having a particle density of less than 0.40 g/cm³. Various sources of hollow ceramic powders exist, including Sphere One, Inc. (Extendospheres®), 3M® (Zeeospheres), Sphere Services Inc. (cenospheres), and Trelleborg Emerson & Cuming, Inc. (Eccospheres®). Preferred hollow ceramic particles 28 include aluminosilicates with a particle size range of about 0.05 to about 200 micrometers, such as Extendospheres® SL (about 10 to about 150 micrometers) available from Sphere One, Inc., and Zeeospheres (D50 of about 18 micrometers) available from 3M.

The silica precursor serves as a binder in the coating composition 24. Preferred silica precursors are believed to be silicone-based compositions such as polymethyl siloxane, though it is foreseeable that other silicon sources and ceramic precursors could be used, such as TEOS (tetra-ethyl-ortho-silicate) or possibly a colloidal silicon source. Particularly suitable precursors include methylsesquisiloxane mixtures of the polysiloxane family available from sources such as Apollo Plastics Corporation (for example, SR350 and SR355) and Dow Chemical Corporation, and a polyvinyl butyral available under the name B-79 from Monsanto Co.

The remaining constituents for the composition 24 are preferably organics, primarily a carrier liquid or solvent and optionally surfactants, dispersants, and/or additional binders/plasticizers capable of adhering the powder particles 26 and 28 together to yield a composition 24 that can be applied to the surface 22. Depending on the types and amounts of the additional ingredients, the composition 24 may be formulated and processed as solid but pliable tapes that can be individually applied to the surface 22, or a more pliable and malleable material that can be applied as a putty or paste. A suitable carrier liquid/solvent is an anhydrous alcohol such as ethanol, denatured alcohol and isopropyl alcohol, though acetone, trichloroethylene, and others compatible with silicone materials could be used. Suitable plasticizers include dibutyl phthalate (DBP) and polyvinyl butyral (for example, the aforementioned B-79). If the composition 24 is to be used in the form of a tape, a sufficient fraction of binders and plasticizers should be present to allow the tape to be applied and chemically or mechanically bonded to the surface 22 with the use of heat and pressure. Surfactants can also be used to achieve a suitably tacky consistency that enables the composition 24, particularly those prepared as a tape, to adhere to the surface 22 exposed by the spalled region 20. Suitable surfactants include an alkyl organic phosphate ester acid surfactant commercially available as PS21A from Whitco Chemical. Another surfactant that can be used is available under the name Merpol A from Stephan.

The fraction of organics used in the composition 24 may also depend on whether the repair process is intended to produce a coating 30 whose structural properties vary through its thickness, in which case multiple layers of the composition 24 with different compositions are applied to the surface 22. For example, it may be desirable that the innermost layer or region of the applied coating material 24 contains sufficient binders/plasticizers to produce submicron voids and yield a desirable porosity level that increases the thermal insulation capability of the coating 30, while the fraction of organics used in the outermost layer or any intermediate layers is preferably lower to minimize porosity to promote abrasion and infiltration resistance.

Whether formulated as a paste or tape, it may be desirable to formulate certain regions of the coating 30 to have additional enhanced properties. For example, the outermost surface region of the coating 30 may incorporate IR-reflective or IR-absorbing particles, as well as other constituents such as erosion- and/or corrosion-resistant materials. Another example is to formulate the outermost surface region of the coating 30 to achieve a smoother surface finish that promotes the aerodynamics of the component 10. In this case, it may be desirable to apply as the outermost layer a coating composition 24 that uses finer solid and/or hollow particles 26 and 28. For example, the interior of the coating 30 may be formed by a composition 24 that contains an alumina powder material such as A 14, while the exterior of the coating 30 may be formed by a composition 24 that contains a finer alumina powder material such as A16SG, and may completely omit the hollow particles 28.

Approximate broad and preferred ranges are stated in weight percents in Tables I and II below for individual constituents for coating compositions 24 in the form of pastes and tapes, respectively.

**TABLE I**

| CONSTITUENTS | BROAD | PREFERRED | EXAMPLE |
|---|---|---|---|
| Solvent | 10 - 60% | 15 - 45% | 29.3% |
| Solid Powder Particles | 5 - 55 | 12 - 35 | 22.0 |
| Hollow Powder Particles | 5 - 45 | 10 - 35 | 30.2 |
| Silica Precursor (binder) | 6 - 40 | 10 - 25 | 18.5 |

For the quantities indicated for the Example in Table I, the solvent is preferably denatured alcohol or acetone, the solid powder particles are preferably A16SG or A14 alumina, and the silica precursor is preferably SR350.

**TABLE II**

| CONSTITUENTS | BROAD | PREFERRED | EXAMPLE |
|---|---|---|---|
| Solvent | 10 - 60% | 12 - 40% | 21.5% |
| Solid Powder Particles | 5 - 55 | 15 - 40 | 28.4 |
| Hollow Powder Particles | 5 - 45 | 10 - 40 | 33.3 |
| Silica Precursor (binder) | 3 - 40 | 5 - 20 | 8.5 |
| Other binders | 2 - 20 | 3 - 10 | 4.0 |
| Plasticizer(s) | 1 - 10 | 1 - 5 | 2.0 |
| Surfactant(s) | 0 - 9 | 1 - 5 | 2.6 |

For the quantities indicated for the Example in Table II, the solvent is preferably denatured alcohol or acetone, the solid powder particles are preferably A16SG alumina, the silica precursor is preferably SR355, the additional binder is preferably B-79, the plasticizer is preferably DBP, and the surfactant is preferably PS21A. The solvent is evaporated from the tape compositions of Table II prior to application of the tape to the component surface 22 and sintering to form the repair coating 30.

The choice of silica precursor in Tables I and II is due in part to their differing silica yields. The SR350 binder indicated in Table I yields silica in an amount of about 60 to about 75 weight percent of the original amount of SR350 binder present in the coating composition 24, whereas a like amount of the SR355 binder indicated in Table II yielding silica in lower amounts of about 30 to about 40 weight percent of the original amount of SR355 binder present in the tape coating composition 24.

A suitable process for forming coating compositions 24 of this invention as a paste involves combining the above-noted constituents of Table I to achieve a suitable paste-like consistency, after which the composition 24 can be applied to fill the spalled region 20 in any suitable manner, such as with a trowel. Depending on its composition, the binder of the paste composition 24 may react at room temperature, or its reaction accelerated by heating such as with a heat lamp, torch, or other heat source until the strength of the resulting repair coating 30 has reached a required level for operation in the turbine engine. A suitable cure treatment is about sixteen hours at room temperature to cure the preferred silicone binders, though cure times can be significantly reduced at elevated temperatures. Conformance of the paste composition 24 to the spalled region 20 and curing of the binder can be promoted by using a thermal treatment that includes pressing the applied composition 24 with a heated iron. Thereafter, post processing operations can be performed to prepare the component 10 for use.

During operation of the turbine engine, the repair coating 30 continues to react, associated with an increase in the strength and other mechanical properties of the coating 30. The preferred silicone binders initially cure by polymerization to form a silicone matrix whose strength is sufficient for engine operation. With extended use at high temperatures, the silicone thermally decomposes to silica, forming a silica matrix in which the ceramic particles 26 and 28 are dispersed.

A suitable process for forming coating compositions 24 of this invention as a tape involves casting the one or more tapes on a tetrafluoroethylene (i.e., TEFLON®) sheet. Compositions within the ranges defined in Table II are applied to the TEFLON sheet and then dried for a duration sufficient to evaporate the solvent. The dried tapes are then removed from the TEFLON sheet and transferred to the component surface to be protected by the repair coating 30. If a coating 30 with multiple layers of different properties is desired, a tape formulated to produce an innermost layer or region of the coating 30 may be applied first, followed by one or more tapes to form the outermost and any intermediate layers or regions of the coating 30. Alternatively, a single multilayer tape may be cast that contains the desired different coating compositions 24, such that only a single tape application is required. An advantage with using a single multilayer tape is that the relative amounts of the solid particles 26, hollow particles 28, and binder can be varied to achieve different porosity levels within the coating 30, for example, greater porosity near the surface 22 of the component 10 and lower porosity near the outer surface of the coating 30. As noted above, the smoothness of the surface of the repair coating 30 can also be improved by appropriately selecting the relative sizes of the solid and hollow particles 26 and 28, and the relative amounts of the solid and hollow particles 26 and 28 and binder.

Following tape application, pressure is preferably applied to the outer surface of the tape(s) through the use of a caul plate, rubber form, or other suitable means in order to produce the desired final surface finish and geometry for the coating 30. If the component 10 has been removed, a vacuum bag can be used in conjunction with an autoclave to apply the heat and pressure required to chemically or mechanically bond the tape(s) to the component 10. The unsintered tape or tapes can then be sintered by operating the engine or an additional thermal treatment to consolidate and set the tape(s). In either case, sintering is performed at a temperature that will not adversely affect the desired properties for the component 10, but above the temperatures at which the binders and plasticizers will burn off and the ceramic particles 26 and 28 will sinter.

While the invention has been described in terms of particular embodiments, it is apparent that other forms could be adopted by one skilled in the art. Accordingly, the scope of the invention is to be limited only by the following claims.

## Claims

1. A method for repairing a thermal barrier coating on a component, wherein the thermal barrier coating is formed of an alumina/silica-based material, the method comprising the steps of:
preparing at least a first coating composition comprising solid ceramic particles, hollow ceramic particles, and a silica precursor binder, wherein the hollow ceramic particles comprise at least one ceramic material chosen from the group consisting of alumina and aluminosilicates;
applying the first coating composition on a surface area of the component exposed by an opening in the thermal barrier coating; and then
reacting the binder to yield a repair coating that covers the surface area of the component, the repair coating comprising the solid ceramic particles and the hollow ceramic particles in a silica matrix formed by thermally decomposing the binder.

2. The method according to claim 1, wherein the solid ceramic particles comprise at least one ceramic material chosen from the group consisting of alumina, magnesia, titania, and calcia.

3. The method according to claim 1 or claim 2, wherein the preparing step comprises preparing the first coating composition as a paste and the applying step comprises applying the paste to the surface area.

4. The method according to claim 3, wherein the first coating composition is prepared to contain, by weight, about 10 to about 60 percent of a solvent, about 5 to about 55 percent of the solid ceramic particles, about 5 to about 45 percent of the hollow ceramic particles, and about 6 to about 40 percent of the silica precursor binder, the balance incidental impurities, and at least a portion of the solvent is removed from the first coating composition prior to applying the first coating composition to the surface area.

5. The method according to claim 1 or claim 2, wherein the preparing step comprises preparing the first coating composition as a tape and the applying step comprises applying the tape to the surface area.

6. The method according to claim 5, wherein the first coating composition is prepared to further contain at least a second binder, at least one plasticizer, and optionally at least one surfactant.

7. The method according to claim 6, wherein the first coating composition is prepared to contain, by weight, about 10 to about 60 percent of a solvent, about 5 to about 55 percent of the solid ceramic particles, about 5 to about 45 percent of the hollow ceramic particles, about 6 to about 40 percent of the silica precursor binder, about 2 to about 20 percent of the at least one second binder, about 1 to about 10 percent of the at least one plasticizer, and up to about 9 percent of the at least one surfactant, the balance incidental impurities, and at least a portion of the solvent is removed from the first coating composition to form the tape and prior to applying the tape to the surface area.

8. The method according to any preceding claim, further comprising preparing a second coating composition comprising the solid ceramic particles, the hollow ceramic particles, the silica precursor binder, and an additional constituent chosen from the group consisting of particles that are more IR-reflective, IR-absorbing, erosion-resistant, and/or corrosion-resistant than the solid ceramic particles and the hollow ceramic particles of the first coating composition, and the second coating composition is applied to form an outermost surface region of the repair coating.

9. The method according to any one of claims 1 to 7, further comprising preparing a second coating composition comprising the silica precursor binder and at least one of second solid ceramic particles and second hollow ceramic particles that are finer than the solid ceramic particles and the hollow ceramic particles of the first coating composition, and the second coating composition is applied to form an outermost surface region of the repair coating having a smoother surface finish than otherwise possible with the first coating composition to promote the aerodynamics of the repair coating.

10. The method according to any preceding claim, wherein the reacting step comprises initially curing the silica precursor binder by polymerization to form a silicone matrix, and then heating the component to thermally decompose the silicone matrix and form the silica matrix.

11. The method according to any preceding claim, wherein the applying and reacting steps are performed while the component remains installed in a gas turbine engine.

12. The method according to claim 11, wherein the gas turbine engine is operated during the reacting step.

13. The method according to any preceding claim, wherein the alumina/silica-based material of the thermal barrier coating comprises alumina particles in a silica matrix.

14. A component repaired by the method of any preceding claim, wherein the opening in the thermal barrier coating is the result of localized spallation of the thermal barrier coating.

## Patentansprüche

1. Verfahren zum Reparieren einer Wärmedämmbeschichtung auf einer Komponente, wobei die Wärmedämmbeschichtung aus einem Aluminiumoxid/Siliziumoxid-basierenden Material ausgebildet ist, und das Verfahren die Schritte aufweist:
Herstellen wenigstens einer ersten Beschichtungszusammensetzung, die Vollmaterial-Keramikpartikel, hohle Keramikpartikel und Siliziumoxidvorläuferbinder enthält, wobei die hohlen Keramikpartikel wenigstens ein aus der aus Aluminiumoxid und Aluminosilikaten bestehenden Gruppe ausgewähltes Keramikmaterial aufweisen;
Aufbringen der ersten Beschichtungszusammensetzung auf einen Oberflächenbereich der Komponente, der durch eine Öffnung in der Wärmedämmbeschichtung freigelegt ist; und dann
Bewirken einer Reaktion des Binders, um eine Reparaturbeschichtung zu erzeugen, die den Oberflächenbereich der Komponente abdeckt, wobei die Reparaturbeschichtung die Vollmaterial-Keramikpartikel und die hohlen Keramikpartikel in einer durch thermische Zersetzung des Binders ausgebildeten Siliziumoxidmatrix aufweist.

2. Verfahren nach Anspruch 1, wobei die Vollmaterial-Keramikpartikel wenigstens ein Keramikmaterial aufweisen, das aus der aus Aluminiumoxid, Magnesiumoxid, Titanoxid und Kalziumoxid bestehenden Gruppe ausgewählt wird.

3. Verfahren nach Anspruch 1 oder Anspruch 2, wobei der Herstellungsschritt die Herstellung der ersten Beschichtungszusammensetzung als eine Paste und der Aufbringungsschritt die Aufbringung der Paste auf den Oberflächenbereich umfasst.

4. Verfahren nach Anspruch 3, wobei die erste Beschichtungszusammensetzung so hergestellt wird, dass sie in Gewichtsprozent ca. 10 bis ca. 60 Prozent eines Lösungsmittels, ca. 5 bis ca. 55 Prozent der Vollmaterial-Keramikpartikel, ca. 5 bis ca. 45 Prozent der hohlen Keramikpartikel und ca. 6 bis ca. 40 Prozent des Siliziumoxidvorläuferbinders und den Rest zufällige Verunreinigungen enthält, und wenigstens ein Teil des Lösungsmittels aus der ersten Beschichtungszusammensetzung vor der Aufbringung der ersten Beschichtungszusammensetzung auf dem Oberflächenbereich entfernt wird.

5. Verfahren nach Anspruch 1 oder Anspruch 2, wobei der Herstellungsschritt die Herstellung der ersten Beschichtungszusammensetzung als ein Band und der Aufbringungsschritt die Aufbringung des Bandes an dem Oberflächenbereich umfasst.

6. Verfahren nach Anspruch 5, wobei die erste Beschichtungszusammensetzung so hergestellt wird, dass sie ferner wenigstens einen zweiten Binder, wenigstens einen Weichmacher und optional wenigstens ein Tensid enthält.

7. Verfahren nach Anspruch 6, wobei die erste Beschichtungszusammensetzung so hergestellt wird, dass sie in Gewichtsprozent ca. 10 bis ca. 60 Prozent eines Lösungsmittels, ca. 5 bis ca. 55 Prozent der Vollmaterial-Keramikpartikel, ca. 5 bis ca. 45 Prozent der hohlen Keramikpartikel, ca. 6 bis ca. 40 Prozent des Siliziumoxidvorläuferbinders, ca. 2 bis ca. 20 Prozent des wenigstens einen zweiten Binders, ca. 1 bis ca. 10 Prozent des wenigstens einen Weichmachers und bis zu ca. 9 Prozent des wenigstens einen Tensids, und den Rest zufällige Verunreinigungen enthält, und wobei wenigstens ein Teil des Lösungsmittels aus der ersten Beschichtungszusammensetzung entfernt wird, um das Band auszubilden und bevor das Band auf den Oberflächenbereich aufgebracht wird.

8. Verfahren nach einem der vorstehenden Ansprüche, ferner mit dem Schritt der Herstellung einer zweiten Beschichtungszusammensetzung, die die Vollmaterial-Keramikpartikel, die hohlen Keramikpartikel, den Siliziumoxidvorläuferbinder und einen zusätzlichen Bestandteil aufweist, das aus der Gruppe ausgewählt wird, die aus Partikeln besteht, die IRreflektierender, IR-absorbierender, erosionsbeständiger und/oder korrosionsbeständiger als die Vollmaterial-Keramikpartikel und die hohlen Keramikpartikel der ersten Beschichtungszusammensetzung sind, und einer Aufbringung der zweiten Beschichtung, um einen äußersten Oberflächenbereich der Reparaturbeschichtung auszubilden.

9. Verfahren nach einem der Ansprüche 1 bis 7, ferner mit dem Schritt der Herstellung einer zweiten Beschichtungszusammensetzung, die den Siliziumoxidvorläuferbinder und wenigstens eines von den zweiten Vollmaterial-Keramikpartikeln und den zweiten hohlen Keramikpartikeln aufweist, die feiner als die Vollmaterial-Keramikpartikel und die hohlen Keramikpartikel der ersten Beschichtungszusammensetzung sind, und der Aufbringung der zweiten Beschichtungszusammensetzung, um einen äußersten Oberflächenbereich der Reparaturbeschichtung mit einer glatteren Endoberfläche zu erzeugen, als sie ansonsten mit der ersten Beschichtungszusammensetzung möglich wäre, um die Aerodynamik der Temperaturbeschichtung zu verbessern.

10. Verfahren nach einem der vorstehenden Ansprüche, wobei der Reaktionsschritt eine anfängliche Härtung des Siliziumoxidvorläuferbinders durch Polymerisation zum Ausbilden einer Siliziummatrix und dann die Erwärmung der Komponente zum thermisch Zerlegen der Siliziummatrix und zum Erzeugen der Siliziumoxidmatrix umfasst.

11. Verfahren nach einem der vorstehenden Ansprüche, wobei die Aufbringungs- und Reaktionsschritte durchgeführt werden, während die Komponente in einem Gasturbinentriebwerk eingebaut bleibt.

12. Verfahren nach Anspruch 11, wobei das Gasturbinentriebwerk während des Reaktionsschrittes betrieben wird.

13. Verfahren nach einem der vorstehenden Ansprüche, wobei das Aluminiumoxid/Siliziumoxid-basierende Material der Wärmedämmbeschichtung Aluminiumoxidpartikel in einer Siliziumoxidmatrix aufweist.

14. Durch das Verfahren einer der vorstehenden Ansprüche reparierte Komponente, wobei die Öffnung in der Wärmedämmbeschichtung das Ergebnis von lokalen Abplatzung der Wärmedämmbeschichtung ist.

## Revendications

1. Procédé pour remettre en état un revêtement formant barrière thermique, dans lequel le revêtement formant barrière thermique est en matière à base d'alumine/de silice, le procédé comprenant les étapes de :
élaboration d'au moins une première composition de revêtement constituée par des particules céramiques pleines, des particules céramiques creuses et un liant à précurseur de silice, les particules céramiques creuses étant constituées d'au moins une matière céramique choisie dans le groupe comprenant l'alumine et les aluminosilicates ;
application de la première composition de revêtement sur une zone superficielle de la pièce exposée par une brèche dans le revêtement formant barrière thermique ; puis
réaction du liant afin de produire un revêtement de remise en état qui couvre la zone superficielle de la pièce, le revêtement de remise en état étant constitué par les particules céramiques pleines et les particules céramiques creuses dans une matrice de silice formée par décomposition thermique du liant.

2. Procédé selon la revendication 1, dans lequel les particules céramiques pleines sont constituées par au moins une matière céramique choisie dans le groupe comprenant l'alumine, la magnésie, l'oxyde de titane et l'oxyde de calcium.

3. Procédé selon la revendication 1 ou la revendication 2, dans lequel l'étape d'élaboration consiste à élaborer la première composition de revêtement sous la forme d'une pâte et l'étape d'application consiste à appliquer la pâte sur la zone superficielle.

4. Procédé selon la revendication 3, dans lequel la première composition de revêtement est élaborée de manière à contenir, en poids, environ 10 à environ 60 pour 100 d'un solvant, environ 5 à environ 55 pour 100 des particules céramiques pleines, environ 5 à environ 45 pour 100 des particules céramiques creuses et environ 6 à environ 40 pour cent du liant à précurseur de silice, le reste étant des impuretés fortuites, et au moins une partie du solvant est éliminée de la première composition de revêtement avant l'application de la première composition de revêtement sur la zone superficielle.

5. Procédé selon la revendication 1 ou la revendication 2, dans lequel l'étape d'élaboration consiste à élaborer la première composition de revêtement sous la forme d'une bande et l'étape d'application consiste à appliquer la bande sur la zone superficielle.

6. Procédé selon la revendication 5, dans lequel la première composition de revêtement est élaborée de manière à contenir en outre au moins un second liant, au moins un plastifiant et éventuellement au moins un tensioactif.

7. Procédé selon la revendication 6, dans lequel la première composition de revêtement est élaborée de manière à contenir, en poids, environ 10 à environ 60 pour 100 d'un solvant, environ 5 à environ 45 pour 100 des particules céramiques pleines, environ 5 à environ 45 pour 100 des particules céramiques creuses et environ 6 à environ 40 pour cent du liant à précurseur de silice, environ 2 à environ 20 pour 100 du/des second(s) liant(s), environ 1 à environ 10 pour 100 du/des plastifiant(s), et jusqu'à environ 9 pour 100 du/des tensioactif(s), le reste étant des impuretés fortuites, et au moins une partie du solvant est éliminée de la première composition de revêtement pour former la bande et avant l'application de la bande sur la zone superficielle.

8. Procédé selon l'une quelconque des revendications précédentes, comportant en outre l'élaboration d'une seconde composition de revêtement constituée par les particules céramiques pleines, les particules céramiques creuses, le liant à précurseur de silice, et un constituant supplémentaire choisi dans le groupe comprenant des particules qui réfléchissent davantage les infrarouges, absorbent davantage les infrarouges, résistent mieux à l'érosion et/ou résistent mieux à la corrosion que les particules céramiques pleines et les particules céramiques creuses de la première composition de revêtement, et la seconde composition de revêtement est appliquée de manière à former une zone superficielle extérieure du revêtement de remise en état.

9. Procédé selon l'une quelconque des revendications 1 à 7, comportant en outre l'élaboration d'une seconde composition de revêtement constituée par le liant à précurseur de silice et des secondes particules céramiques pleines et/ou des secondes particules céramiques creuses qui sont plus fines que les particules céramiques pleines et les particules céramiques creuses de la première composition de revêtement, et la seconde composition de revêtement est appliquée de manière à former une zone superficielle extérieure du revêtement de remise en état ayant un fini de surface plus lisse que ne le permet autrement la première composition de revêtement pour favoriser l'aérodynamisme du revêtement de remise en état.

10. Procédé selon l'une quelconque des revendications précédentes, dans lequel l'étape de réaction comprend initialement le durcissement du liant à précurseur de silice par polymérisation afin de former une matrice de silicone, puis le chauffage du constituant pour décomposer thermiquement la matrice de silicone et former la matrice de silice.

11. Procédé selon l'une quelconque des revendications précédentes, dans lequel les étapes d'application et de réaction sont exécutées pendant que la pièce reste installée dans un moteur à turbine à gaz.

12. Procédé selon la revendication 11, dans lequel on fait fonctionner le moteur à turbine à gaz pendant l'étape de réaction.

13. Procédé selon l'une quelconque des revendications précédentes, dans lequel la matière à base d'alumine/silice du revêtement formant barrière thermique consiste en particules d'alumine dans une matrice de silice.

14. Pièce remise en état par le procédé selon l'une quelconque des revendications précédentes, dans laquelle la brèche dans le revêtement formant barrière thermique est la conséquence d'un écaillement localisé du revêtement formant barrière thermique.
